# EUROPÄISCHE PATENTANMELDUNG

(11) **EP 1 508 672 A1**
(43) Veröffentlichungstag der Anmeldung: **23.02.2005**
(21) Anmeldenummer: 03019002.9
(22) Anmeldetag: 21.08.2003
(51) Int. Cl.: F01D 11/02, F01D 11/00

(54) **Segmentierter Befestigungsring für eine Turbine**

(71) Anmelder: SIEMENS AKTIENGESELLSCHAFT, 80333 München (DE)
(72) Erfinder: Tiemann, Peter, 58452 Witten (DE)

(57) **Zusammenfassung**

Die Erfindung betrifft einen segmentierten Innenring (30) zum Halten von Leitschaufeln (16) einer Turbine, insbesondere für axial durchströmte stationäre Gasturbinen (1), der die Rotorwelle der Turbine koaxial umgreift und der am Außenumfang in gleichen Winkelabständen eine Anzahl von Leitschaufeln (16) aufweist, die einen Leitschaufelring bilden, der mit seiner Stirnseite (52) einer sich radial erstreckenden Seitenwand (51) eines auf der Rotorwelle ausgebildeten Wellenabsatzes (24) zugewandt ist, wobei an der Stirnseite (52) des Innenrings (30) und an der sich radial erstreckenden Seitenwand (51) des Wellenabsatzes (24) jeweils eine Hälfte einer Dichtung (31) ausgebildet ist. Um einen kompakten Innenring (30) zum Halten von Leitschaufeln (16) einer Turbine anzugeben, bei dem eine effiziente Dichtwirkung für den zwischen Innenring (30) und Rotor (3) herrschenden Spalt erzielt wird, wird vorgeschlagen, dass die Dichtung (31) sich aus mehreren radial übereinander gestapelten Labyrinthdichtungen (28) zusammensetzt und dass bei der Montage des Innenrings (30) durch Axialverschiebung in Richtung des Wellenabsatzes (24) die an der Stirnseite befindliche Hälfte der Dichtung (31) mit der anderen Hälfte der Dichtung zusammenfügbar ist.

## Beschreibung

Die Erfindung betrifft einen segmentierten Innenring zum Halten von Leitschaufeln einer Turbine, insbesondere für eine von einem Arbeitsfluid axial durchströmte stationäre Gasturbine. Sie betrifft ferner eine Gasturbine mit einem segmentierten Innenring sowie ein Verfahren zum Befestigen eines segmentierten Innenrings für Leitschaufeln einer Turbine.

Aus der DE 37 12 628 ist ein Innenring zum Halten von Leitschaufeln einer Gasturbine bekannt. Die zu einem Leitschaufelring sternförmig um den Rotor angeordneten Leitschaufeln werden dabei mit ihrem radial außenliegenden Leitschaufelfuß am Gehäuse der Gasturbine befestigt. Die sich radial erstreckenden Leitschaufeln weisen an ihrer dem Rotor zugewandten Seite den Leitschaufelkopf auf, der mit dem feststehenden Innenring verbunden ist. Dieser im Querschnitt U-förmige Innenring umgreift den Rotor der Gasturbine koaxial und verbindet die Leitschaufeln eines Leitschaufelringes miteinander, um die Stabilität des Leitschaufelringes zu erhöhen und das Schwingungsverhalten der Leitschaufeln zu verbessern. Ein Spalt ist dabei zwischen dem Steg des U-förmigen Innenrings, dessen Flanken und den korrespondierenden, dem Rotor zugehörigen Umfangs- und Stirnflächen gebildet. Gleichfalls weist der Steg des U-förmigen Innenrings an seiner dem Rotor zugewandten Oberfläche eine Hälfte einer Labyrinthdichtung auf, die mit der am Rotor angeordneten zweiten Hälfte die Labyrinthdichtung bildet.

Während des Betriebes der Gasturbine soll das im Strömungskanal strömende Arbeitsfluid nur an den Leitschaufeln eines Leitschaufelringes vorbeiströmen. Jedoch kann das Arbeitsfluid auch durch den von feststehenden und rotierenden Komponenten gebildeten Spalt als Leckagestrom hindurchströmen. Um die Leckageströmung zu verringern, wird der Spalt zwischen den feststehenden und den rotierenden Komponenten mittels der Labyrinthdichtung abgedichtet.

Ferner ist es bekannt, im Spalt zwischen der Flanke des Innenrings und des Wellenabsatzes Labyrinthdichtungen vorzusehen. Um eine ausreichende Dichtwirkung zu erzielen, sind zwei Labyrinthdichtungen axial und radial versetzt zueinander terrassenförmig im Spalt zwischen Flanke und Wellenabsatz angeordnet.

Die terrassenförmige Anordnung mehrerer Labyrinthdichtungen ist jedoch raumintensiv.

Aufgabe der vorliegenden Erfindung es, einen platzsparenden Innenring zum Halten von Leitschaufeln einer Turbine anzugeben bei gleichzeitiger Verminderung der Leckageströmung. Weitere Aufgabe ist es, ein Verfahren zur Montage eines solchen Innenringes anzugeben sowie eine Gasturbine mit einem solchen Innenring auszustatten.

Die auf den Innenring bezogene Aufgabe wird durch die Merkmale des Anspruchs 1 gelöst. Die auf die Gasturbine bezogene Aufgabe wird durch die Merkmale des Anspruchs 8 und die auf das Verfahren bezogene Aufgabe wird durch die Merkmale des Anspruchs 9 gelöst. Vorteilhafte Ausgestaltungen sind in den Unteransprüchen gegeben.

Mit der Erfindung wird ein vollständig neuer Weg eingeschlagen. Von der bisherigen Einschränkung, den Innenring so zu gestalten, dass dieser nach radialem Verschieben zum Rotor in der Betriebslage ist, wird sich gelöst. Es wird vorgeschlagen, dass der segmentierte Innenring nach dem radialen Verschieben zusätzlich in Richtung des Wellenabsatzes axial verschoben wird, um ihn so in seine Betriebsposition zu bringen. Somit ist es möglich, mehrere radial übereinander gestapelte Labyrinthdichtungen anzuordnen und die Dichtwirkung wesentlich zu erhöhen. Folglich besteht die Dichtung zwischen feststehenden und rotierenden Komponenten aus mehreren übereinander gestapelten Labyrinthdichtungen. Der den Wirkungsgrad der Gasturbine mindernde Leckagestrom wird dadurch erheblich reduziert.

Der benötigte Raumbedarf für die radial gestapelten Labyrinthdichtungen ist gegenüber der bereits bekannten terrassenförmigen Anordnung geringer. Im besonderen ist die Ausdehnung der Dichtung als auch des gesamten Innenrings in axialer Richtung verkleinert worden.

Weil die erfinderische Konstruktion zur Drehachse des Rotors rotationssymmetrisch ist und die Montage der feststehenden Komponenten um den Rotor herum radial erfolgt, d.h. die Komponenten zum Rotor hin bewegt und dann montiert werden, sind die feststehenden Komponenten in Segmente unterteilt. Somit versteht die Anmeldung unter einer radial montierbaren Komponente jeweils ein Segment, wenn nicht Segmente explizit benannt sind.

Wenn für jede Labyrinthdichtung ein erster koaxialer Balkon an der Stirnseite des Innenrings und ein weiterer koaxialer Balkon am Wellenabsatz angeordnet ist, die jeweils in Axialrichtung vorspringen, können die beiden Balkone im montierten Zustand des Innenrings sich radial einander gegenüberliegen. Diese Stapelung von Balkonen ermöglicht die Reihenschaltung von Labyrinthdichtungen und formt einen meanderförmigen Spalt für den Leckagestrom.

Vorteilhafterweise wird die Labyrinthdichtung durch eine Dichtfläche und zumindest einen Dichtzahn gebildet, wobei der erste Balkon die koaxiale Dichtfläche aufweist, die dem weiteren Balkon zugewandt ist, und der weitere Balkon an seiner dem ersten Balkon zugewandten Umfangsfläche zumindest einen sich zur Dichtfläche hin erstreckenden umlaufenden Dichtzahn aufweist.

Zur axialen Sicherung ist der Innenring an den drehfesten Baugruppen und/oder an den Leitschaufeln festlegbar.

Wenn der Innenring zwischen zwei Laufschaufelringen angeordnet ist, kann dieser mittels eines Sicherungselementes gegen axiales Verschieben gesichert werden. Dabei ist das Sicherungselement als segmentierter Sicherungsring ausgebildet, der an der Leitschaufel gelagert ist.

Zweckmäßigerweise ist der Sicherungsring stromaufwärts des Innenrings angeordnet.

Die Montage eines Segments des Innenrings erfolgt durch radiales zum Rotor Bewegen und ein sich daran anschließendes axiales Verschieben, bis sich die an der Stirnseite befindliche Hälfte der Dichtung mit der an dem Wellenabsatz befindlichen Hälfte der Dichtung radial überlappt, um so die Dichtung aus mehreren radial übereinander gestapelten Labyrinthdichtungen zu bilden. Somit verlängert sich der zwischen den feststehenden und rotierenden Komponenten gebildete Spalt. Mehrere gestapelte Labyrinthdichtungen sind daher in kompakter Bauweise einsetzbar.

Vorteilhafterweise sind die Dichtflächen und die an den Balkonen vorgesehenen Dichtzähne derart ausgebildet, dass eine Axialverschiebung des Rotors entgegen der Strömungsrichtung des Arbeitsfluids möglich ist, ohne dass sich eine Änderung der Dichtwirkung einstellt. Folglich kann während des Betriebes der Gasturbine der Rotor verschoben werden, ohne das sich die Dichtwirkung verschlechtert. Dies ist insbesondere wichtig, wenn mit der Verschiebung des Rotors der Spalt zwischen Laufschaufelspitze und der radial außen liegenden Innenwand des Heißgaskanals verringert wird.

Die Erfindung wird anhand einer Zeichnung erläutert. Dabei zeigen:
- FIG 1: einen segmentierten Befestigungsring für Leitschaufeln einer ersten Turbinenstufe,
- FIG 2: den segmentierten Innenring für die Leitschaufeln einer zweiten, dritten und vierten Turbinenstufe und
- FIG 3: einen Längsteilschnitt durch eine Gasturbine.

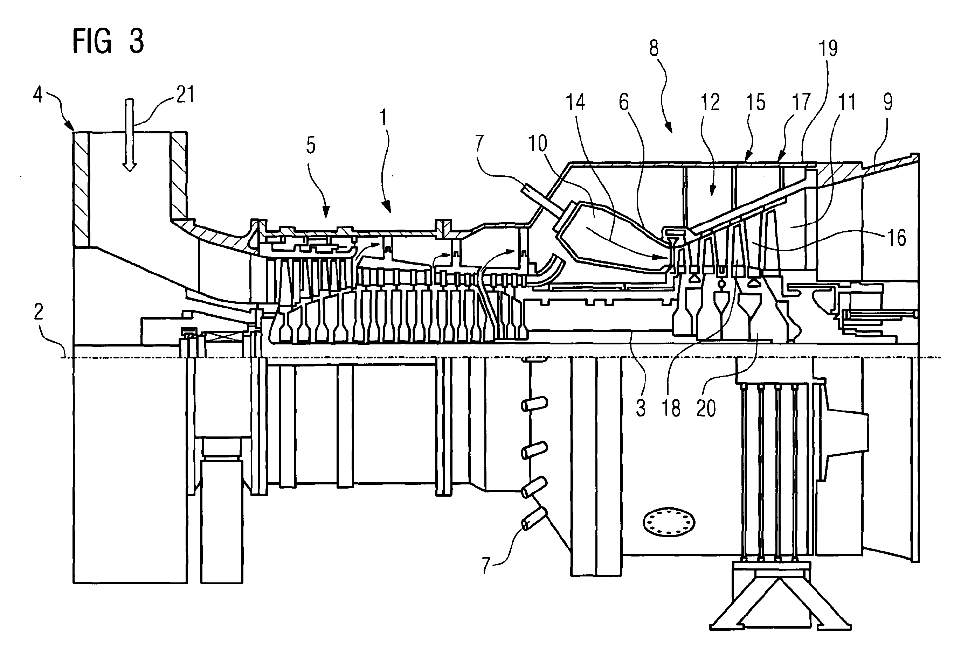

Die FIG 3 zeigt eine Gasturbine 1 in einem Längsteilschnitt. Sie weist im Inneren einen um eine Rotationsachse 2 drehgelagerten Rotor 3 auf, der auch als Turbinenläufer oder Rotorwelle bezeichnet wird. Entlang des Rotors 3 folgen aufeinander ein Ansauggehäuse 4, ein Verdichter 5, eine torusartige Ringbrennkammer 6 mit mehreren koaxial angeordneten Brennern 7, eine Turbine 8 und das Abgasgehäuse 9. Die Ringbrennkammer 6 bildet dabei einen Verbrennungsraum 10, der mit einem ringförmigen Heißgaskanal 11 kommuniziert. Dort bilden vier hintereinander geschaltete Turbinenstufen 12 die Turbine 8. Jede Turbinenstufe 12 ist aus zwei Schaufelringen gebildet. In Strömungsrichtung eines Arbeitsfluids 14 gesehen, folgt im Heißgaskanal 11 einer Leitschaufelreihe 17 eine aus Laufschaufeln 18 gebildete Reihe 15. Die Leitschaufeln 16 sind dabei am Stator 19 befestigt, wohingegen die Laufschaufeln 18 einer Reihe 15 mittels einer Turbinenscheibe 20 am Rotor 3 befestigt sind. An dem Rotor 3 angekoppelt ist ein Generator oder eine Arbeitsmaschine (nicht dargestellt).

Während des Betriebes der Gasturbine 1 wird vom Verdichter 5 durch das Ansauggehäuse 4 Luft 21 angesaugt und verdichtet. Die am turbinenseitigen Ende des Verdichters 5 bereitgestellte Luft 21 wird zu den Brennern 7 geführt und dort mit einem Brennmittel vermischt. Das Gemisch wird dann unter Bildung des Arbeitsfluids 14 im Verbrennungsraum 10 verbrannt. Von dort aus strömt das Arbeitsfluid 10 im Heißgaskanals 11 an den Leitschaufeln 16 und den Laufschaufeln 18 vorbei. An den Laufschaufeln 18 entspannt sich das Arbeitsfluid 14 impulsübertragend, so dass der Rotor 3 angetrieben wird und mit ihm die an ihn angekoppelte Arbeitsmaschine.

Die Leitschaufeln 16 weisen an ihrer dem Gehäuse 13 zugewandten Seite einen Leitschaufelfuß auf, mit dem sie in einem ringförmigen Leitschaufelträger verhakt sind. An ihrem dem Rotor 3 zugewandten Ende, dem Leitschaufelkopf, sind sie mit einem Innenring 30 verbunden.

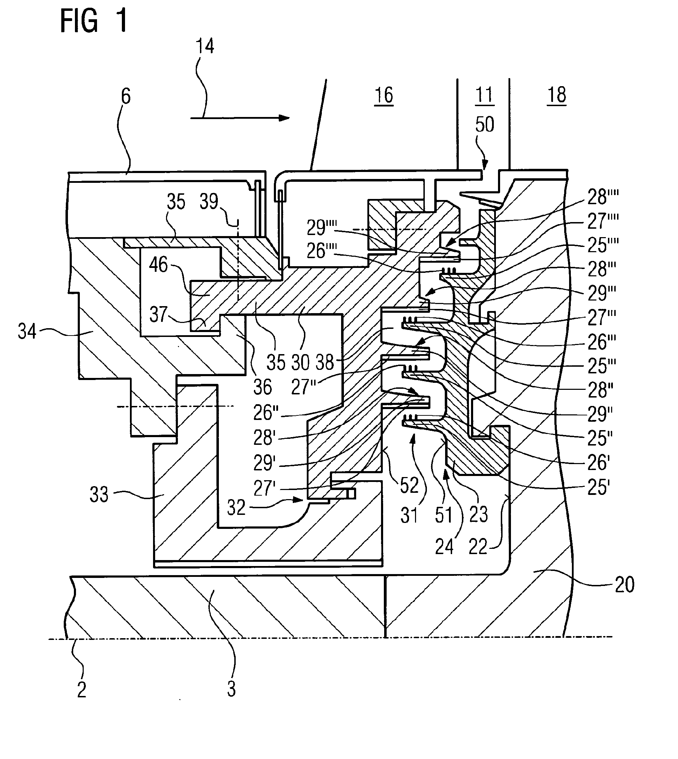

FIG 1 zeigt einen Ausschnitt aus der Gasturbine 1 zwischen der Leitschaufel 16 der ersten Turbinenstufe 12 und dem Rotor 3. Die radial innenliegende Innenwand der Brennkammer 6 begrenzt den Heißgaskanal 11 nach innen. In Strömungsrichtung des Arbeitsfluids 14 folgt der Leitschaufel 16 der ersten Turbinenstufe 12 die Laufschaufel 18.

Am Rotor 3 befindet sich die Turbinenscheibe 20, die an ihrem äußeren Umfang die Laufschaufeln 18 hält. Zur Sicherung der Laufschaufeln 18 gegen axiales Verschieben ist an einer Seitenwand 22 der Turbinenscheibe 20 ein Abdeckelement 23 mittels mehrerer radial beabstandeter Haken mit der Turbinenscheibe 20 verhakt. Dabei bildet das Abdeckelement 23 zusammen mit der Turbinenscheibe 20 einen Wellenabsatz 24.

An einer der Brennkammer 6 zugewandten Seitenwand 51 des Abdeckelements 23 sind mehrere sich in Axialrichtung erstreckende und koaxial umlaufende Balkone 25', 25'', 25''', 25"" angeordnet. An jedem Balkon 25 erstrecken sich auf der dem Rotor 3 abgewandten Umfangsfläche jeweils drei Dichtzähne 26', 26", 26"', 26"", die koaxial auf dieser Umfangsfläche umlaufen.

Zwischen der radial innenliegenden Innenwand der Brennkammer 6 und dem Rotor 3 sind die drei Baugruppen 33, 34, 35 drehfest am Stator 19 montiert. Zwischen den Baugruppen 33, 34, 35 und dem Abdeckelement 23 ist der drehfeste Innenring 30 vorgesehen.

Der Innenring 30 weist an seiner dem Wellenabsatz 24 zugewandten Stirnseite 52 mehrere sich in Axialrichtung erstreckende und koaxial umlaufende Balkone 29', 29", 29"', 29"" auf. Dabei sind an den Umfangsflächen der Balkone 29, die den Dichtzähnen 26 zugewandt sind, jeweils Dichtflächen 27', 27", 27''', 27"" vorgesehen. Jede Dichtfläche 27 bildet mit ihren korrespondierenden Dichtzähnen 26 eine Labyrinthdichtung 28.

Zwischen dem Abdeckelement 23 und dem Innenring 30 ist ein meanderförmiger Spalt 38 geformt, in dem somit vier Labyrinthdichtungen 28', 28", 28''', 28'''' sequenziell geschaltet sind, von denen die drei Labyrinthdichtungen 28', 28", 28''' radial übereinander gestapelt sind.

Die Labyrinthdichtung 28"" ist, bezogen auf die radial nächst innenliegende Labyrinthdichtung 28"' nicht radial gestapelt, sondern nach Art einer Terrasse angeordnet, d.h. die Labyrinthdichtung 28"" ist gegenüber der Labyrinthdichtung 28''' in Axialrichtung versetzt.

Der Innenring 30 weist an seiner der Brennkammer 6 zugewandten Stirnseite einen sich in Axialrichtung erstreckenden Arm 46 auf, an dessen freien Ende ein sich in Radialrichtung nach innen erstreckender Vorsprung 37 angeformt ist.

Die Baugruppe 34 umfasst an ihrer dem Innenring 30 zugewandten Seite einen Vorsprung 36, der mit dem Vorsprung 37 des Innenrings 30 eine Verhakung bildet.

Vor der Montage des Innenrings 30 sind neben dem Rotor 3 und der Turbinenscheibe 20 die Baugruppen 33, 34 bereits montiert. Während der Montage eines der Segmente des Innenrings 30 wird dieses radial von außen zum Rotor 3 bewegt, bis die innere Umfangsfläche des Arms 46 am Vorsprung 36 der Baugruppe 34 anliegt. Anschließend wird das Segment des Innenrings 30 in Richtung des Wellenabsatzes 24 verschoben, bis der Vorsprung 36 mit dem Vorsprung 37 eine Verhakung bildet. Mit dem Verschieben in Axialrichtung wird gleichfalls die Verhakung 32 des Innenrings 30 mit der Baugruppe 33 geschlossen.

Der Innenring 30 befindet sich dann in seiner Betriebsposition, in der die Dichtflächen 27 den Dichtzähnen 26 gegenüberliegen, so dass jede Labyrinthdichtung 28 betriebsbereit ist.

Danach erfolgt die Montage der Baugruppe 35. Sie wird mit einer Schraube 39 am Innenring 30 befestigt und liegt dabei formschlüssig an der Baugruppe 34 an. Sie sichert so den Innenring 30 gegen axiales Verschieben entgegen der Strömungsrichtung des Arbeitsfluids 14. Anschließend wird die Leitschaufel 16 und die Innenwand der Brennkammer 6 montiert. Durch die Verhakung 32 ist ein Verschieben des Innenrings 30 in Strömungsrichtung des Arbeitsfluids ebenfalls wirksam verhindert.

Während des Betriebes der Gasturbine 1 strömt im Heißgaskanal 11 ein Arbeitsfluid 14. Um ein Eindringen des Arbeitsfluids 14 als Leckagestrom in einen von feststehenden und rotierenden Komponenten gebildeten Spalt 38 zu verhindern, weist der Spalt 38 mehrere radial übereinander gestapelte Labyrinthdichtungen 28 auf, die strömungstechnisch gemeinsam als eine Dichtung 31 wirken.

Die drei ohne axialen Versatz zueinander gestapelten Labyrinthdichtungen 28', 28 ", 28''' erlauben eine kompaktere Bauweise bei gleichzeitiger Verbesserung der Dichtwirkung durch die Erhöhung der Anzahl von Labyrinthdichtungen 28.

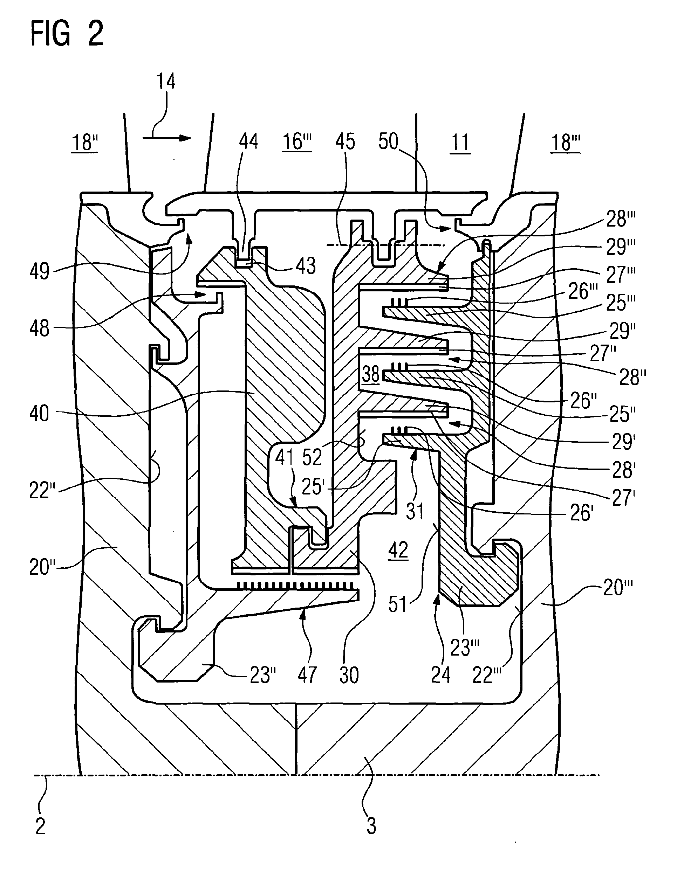

FIG 2 zeigt einen zwischen dem Heißgaskanal 11 und der Drehachse 2 des Rotors 3 liegenden Ausschnitt aus einer Gasturbine 1. Die Turbinenscheibe 20" trägt die Laufschaufel 18" der zweiten Turbinenstufe und die Turbinenscheibe 20''' die Laufschaufel 18''' der dritten Turbinenstufe. An der Seitenwand 22" der Turbinenscheibe 20" sichert das Abdeckelement 23" die Laufschaufel 18" gegen axiales Verschieben. Mittels zweier radial zueinander beabstandeter Verhakungen ist das Abdeckelement 23" mit der Turbinenscheibe 20" verhakt. Ebenso sichert das Abdeckelement 23''' die Laufschaufel 18''' gegen axiales Verschieben. Dabei ist das Abdeckelement 23''' mit der Turbinenscheibe 20''' auf der Seitenwand 22''' miteinander verhakt.

In der zwischen den beiden Turbinenscheiben 20 ", 20''' gebildeten nutförmigen Ausnehmung 42 ist der Innenring 30 mit einem Sicherungselement 40 vorgesehen.

Das Sicherungselement 40 ist mit dem Innenring 30 an seiner dem Rotor 3 zugewandten Seite mittels einer Verhakung 41 und an seiner dem Rotor 3 abgewandten Seite mit der Leitschaufel 16''' verbunden. Dazu ist der Innenring 30 mittels einer Schraube 45 mit der Leitschaufel 16''' verschraubt, wohingegen das Sicherungselement 40 mit der Leitschaufel 16''' verklemmt ist. Das Sicherungselement 40 weist eine Nut 43 auf, in die ein Vorsprung 44 sich erstreckt, der an der Leitschaufel 16''' angeordnet ist.

Das Abdeckelement 23''' weist an seiner der Turbinenscheibe 20''' abgewandten Seitenwand 51 drei sich in Axialrichtung erstreckende und koaxial umlaufende Balkone 25', 25", 25''' auf. Am Außenumfang der einzelnen Balkone 25', 25'', 25''' sind jeweils drei koaxial umlaufende Dichtzähne 26', 26", 26''' vorgesehen. Der Innenring 30 weist an seiner der Turbinenscheibe 20''' zugeordneten Stirnseite 52 ebenfalls drei Balkone 29', 29", 29'" auf, die sich in Richtung des Wellenabsatzes 24 erstrecken und quer dazu koaxial umlaufen. Jeder Balkon 29 weist an seiner inneren Umfangsfläche eine Dichtfläche 27 auf, die den radial weiter innen liegenden Balkonen 25 des Abdeckelementes 23''' zugewandt sind. Dabei bildet die Dichtfläche 27' mit dem Dichtzahn 26' eine Labyrinthdichtung 28', die Dichtfläche 27" mit dem Dichtzahn 26" eine weitere Labyrinthdichtung 28" und die Dichtfläche 27''' mit dem Dichtzahn 26''' die dritte Labyrinthdichtung 28'''.

Zur Montage des Innenrings 30 wird dieser radial von außen nach innen zum Rotor 3 in die nutförmige Ausnehmung 42 zwischen den beiden Turbinenscheiben 20", 20''' hineinbewegt. Anschließend erfolgt eine axiale Verschiebung in Richtung des Wellenabsatzes 24, bis die Dichtflächen 27 mit ihren zugehörigen Dichtzähnen 26 die Labyrinthdichtung 28 bilden. Danach wird das Sicherungselement 40 radial von außen zum Rotor 3 hin hineinbewegt, so dass die Verhakung 41 zwischen Innenring 30 und Sicherungselement 40 gebildet wird. Anschließend wird die Leitschaufel 16''' von außen zum Rotor 3 bewegt und mit dem Innenring 30 mittels der Schraube 45 verschraubt. Die durch eine radiale Verschiebung lösbare Verhakung 41 verhindert eine axiale Verschiebung des Innenrings 30.

Eine Verschiebung des Rotors 3 entgegen der Strömungsrichtung des Arbeitsfluids 14 ist möglich, ohne dass ein Balkon 25, 29 die ihm gegenüberliegende Stirnseite berührt oder an dieser anschlägt.

Der während des Betriebes der Gasturbine 1 drehfeste Innenring 30 bildet mit den rotierenden Abdeckelementen 23 einen Spalt 38, der mittels der Dichtung 31 abgedichtet wird. Das Arbeitsfluid 14 wird wirksam am Verlassen des Heißgaskanals 11 gehindert, so dass es bestimmungsgemäß an den Leitschaufeln 16 und Laufschaufeln 18 vorbeiströmt. Der Leckagestrom wird wirksam verringert, was zu einer Wirkungsgradsteigerung führt.

Ferner verringern die Dichtung 47, 48, 49, 50 den Leckagestrom zwischen rotierenden und drehfesten Komponenten.

## Patentansprüche

1. Segmentierter Innenring (30) zum Halten von Leitschaufeln (16) einer Turbine, insbesondere für eine von einem Arbeitsfluid (14) axial durchströmte stationäre Gasturbine (1),
der die Rotorwelle der Turbine koaxial umgreift und der am Außenumfang in gleichen Winkelabständen eine Anzahl von Leitschaufeln (16) aufweist, die einen Leitschaufelring bilden,
der mit seiner Stirnseite (52) einer sich radial erstreckenden Seitenwand (51) eines auf der Rotorwelle ausgebildeten Wellenabsatzes (24) zugewandt ist,
wobei an der Stirnseite (52) des Innenrings (30) und an der sich radial erstreckenden Seitenwand (51) des Wellenabsatzes (24) jeweils eine Hälfte einer Dichtung (31) ausgebildet ist,
**dadurch gekennzeichnet, dass**
die Dichtung (31) sich aus mehreren radial übereinander gestapelten Labyrinthdichtungen (28) zusammensetzt, wobei zumindest eine der beiden Hälften der Dichtung (31) zur Montage axial verschiebbar ist.

2. Vorrichtung nach Anspruch 1
**dadurch gekennzeichnet, dass**
für jede Labyrinthdichtung (28) ein erster koaxialer Balkon (25) an der Stirnseite (52) und ein weiterer koaxialer Balkon (29) am Wellenabsatz (24) angeordnet ist, die jeweils in Axialrichtung vorspringen und
dass die beiden Balkone (25,29) im montierten Zustand des Innenrings (30) sich radial einander gegenüberliegen.

3. Vorrichtung nach Anspruch 2,
**dadurch gekennzeichnet, dass**
der erste Balkon (25) eine dem weiteren Balkon (29) zugewandte koaxiale Dichtfläche (27) aufweist und
der weitere Balkon (29) an seiner dem ersten Balkon (25) zugewandten Umfangsfläche zumindest einen sich zur Dichtfläche (27) hin erstreckenden koaxialen Dichtzahn (26) aufweist,
wobei die Labyrinthdichtung (28) durch die Dichtfläche (27) und den zumindest einen Dichtzahn (26) gebildet wird.

4. Vorrichtung nach Anspruch 1, 2 oder 3,
**dadurch gekennzeichnet, dass**
der Innenring (30) an zumindest einer drehfesten Baugruppen (33, 34 ,35)und/oder an den Leitschaufeln (16) festlegbar ist.

5. Vorrichtung nach Anspruch 1, 2 oder 3,
**dadurch gekennzeichnet, dass**
der Innenring (30) mittels eines Sicherungselementes (40) gegen axiales Verschieben gesichert ist.

6. Vorrichtung nach Anspruch 5,
**dadurch gekennzeichnet, dass**
das Sicherungselement (40) als segmentierter Sicherungsring ausgebildet ist, der an der Leitschaufel (16) gelagert ist.

7. Vorrichtung nach Anspruch 6,
**dadurch gekennzeichnet, dass**
der Sicherungsring bezogen auf ein durch die Turbine axial strömendes Arbeitsfluid (14) stromaufwärts des Innenrings (30) angeordnet ist.

8. Gasturbine mit einem Innenring (30) nach einem der vorherigen Ansprüche.

9. Verfahren zum Montieren eines segmentierten Innenrings (30) für Leitschaufeln (16) einer Turbine, insbesondere für eine von einem Arbeitsfluid (14) axial durchströmte stationäre Gasturbine (1),
der die Rotorwelle der Turbine koaxial umgreift und der am Außenumfang in gleichen Winkelabständen eine Anzahl von Leitschaufeln (16) aufweist, die einen Leitschaufelring bilden,
der mit seiner Stirnseite (52) einer sich radial erstreckenden Seitenwand (51) eines auf der Rotorwelle ausgebildeten Wellenabsatzes (24) zugewandt ist,
wobei an der Stirnseite (52) des Innenrings (30) und an der sich radial erstreckenden Seitenwand (51) des Wellenabsatzes (24) jeweils eine Hälfte einer Dichtung (31) ausgebildet ist,
**dadurch gekennzeichnet, dass**
die sich aus mehreren radial übereinander gestapelten Labyrinthdichtungen (28) zusammensetzende Dichtung (31) durch den Ablauf der folgenden Montageschritte zusammengefügt wird:
a) der Innenring (30) wird radial nach innen zur Rotorwelle bewegt und anschließend
b) zum Zusammenfügen der Dichtung (31) in Axialrichtung in Richtung des Wellenabsatzes (24) verschoben, bis die an der Stirnseite (52) befindliche Hälfte der Dichtung (31) mit sich der anderen Hälfte der Dichtung (31) radial überlappt.

10. Verfahren nach Anspruch 9,
**dadurch gekennzeichnet, dass**
ein als segmentierter Sicherungsring ausgebildetes Sicherungselement (40) nach der Montage des Innenrings (30) radial nach innen zum Rotorwelle bewegt wird und sich mit dem Innenring (30) verhakt.
